# EUROPEAN PATENT APPLICATION

(11) **EP 4 753 324 A1**
(43) Date of publication of application: **03.06.2026**
(21) Application number: 24848190.5
(22) Date of filing: 26.07.2024
(51) Int. Cl.: H04W 28/02

(54) **DATA TRANSMISSION METHOD, DEVICE, AND COMPUTER-READABLE STORAGE MEDIUM**

(30) Priority: 31.07.2023 CN 202310960320
(71) Applicant: ZTE CORPORATION, Shenzhen, Guangdong 518057 (CN)
(72) Inventor: WANG, Daifeng, Shenzhen, Guangdong 518057 (CN); NIU, Kang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/107926
(87) International publication number: WO 2025/026233

(57) **Abstract**

Provided in the embodiments of the present description are a data transmission method, an electronic device, and a computer-readable storage medium. The method comprises: determining the current estimated downlink transmission rates of a first carrier and a second carrier, wherein the first carrier is a carrier mounted on a master node (MN), and the second carrier is a carrier mounted on a secondary node (SN); on the basis of the current estimated downlink transmission rates of the first carrier and the second carrier, determining a sending path for the current data packet to be sent; and sending said data packet to a target radio link control (RLC) entity, wherein the target RLC entity sends, by means of the sending path, the current data to be sent.

## Description

### CROSS-REFERENCE TO RELATED APPLICATIONS

The present application claims priority to the Chinese patent application No. 202310960320.0 filed on July 31, 2023 to the CNIPA, and entitled "DATA TRANSMISSION METHOD, DEVICE, AND COMPUTER-READABLE STORAGE MEDIUM", the entire content of which is incorporated herein by reference.

### TECHNICAL FIELD

The present disclosure relates to the technical field of mobile communications, in particular to a data transmission method, a device, and a computer-readable storage medium.

### BACKGROUND

Starting with the 5th Generation Mobile Communication Technology (5G), mobile communication systems have begun to support multiple radio access technologies and have introduced dual connectivity technology. In this technology, a terminal device (user equipment, UE) equipped with multiple Rxs/Txs can utilize radio resources scheduled by two base stations. These two base stations are connected via an Xn/X2 interface, where one base station serves as a master node (MN) and the other as a secondary node (SN).

The dual connectivity technology allows the UE to connect to multiple carriers simultaneously and enables the same bearer to be transmitted concurrently over the multiple carriers, known as a split bearer. Under dual connectivity, the split bearer can take various forms, including an MN-terminated split bearer and an SN-terminated split bearer. In the MN-terminated split bearer, a packet data convergence protocol (PDCP) entity resides on the MN side, while multiple radio link control (RLC) entities are distributed across different carriers and associated with their respective carriers. In the SN-terminated split bearer, a PDCP layer resides on the SN side, while multiple RLC entities are distributed across different carriers and associated with their respective carriers.

When a data stream of a split bearer arrives at the PDCP layer, if too little data is allocated to a specific carrier, resources of that carrier cannot be fully utilized, leading to slow traffic ramp-up. If too much data is allocated to a specific carrier, it may cause congestion on a link, increase data packet round-trip delay, and impact overall traffic performance. Therefore, how to reasonably allocate the data stream arriving at the PDCP layer to each carrier remains a technical problem that urgently needs to be resolved.

### SUMMARY

In a first aspect, a data transmission method is provided, including: determining current estimated downlink transmission rates of a first carrier and a second carrier, wherein the first carrier is a carrier mounted at a master node (MN), and the second carrier is a carrier mounted at a secondary node (SN); determining, based on the current estimated downlink transmission rates of the first carrier and the second carrier, a sending path for a current data packet to be sent; and sending the current data packet to be sent to a target radio link control (RLC) entity, wherein the target RLC entity sends the current data packet to be sent via the sending path.

In a second aspect, a data transmission method is provided, including: determining, based on a preset parameter of a carrier mounted at a node where a radio link control (RLC) entity is located, a current estimated downlink transmission rate of the carrier, wherein the node includes a master node (MN) or a secondary node (SN); and reporting the current estimated downlink transmission rate of the carrier to a packet data convergence protocol (PDCP) entity, wherein the current estimated downlink transmission rate of the carrier is used by the PDCP entity to determine a sending path for a current data packet to be sent at the PDCP entity.

In a third aspect, a data transmission apparatus is provided, including: a rate determining module, configured to determine current estimated downlink transmission rates of a first carrier and a second carrier, wherein the first carrier is a carrier mounted at a master node (MN), and the second carrier is a carrier mounted at a secondary node (SN); a path determining module, configured to determine, based on the current estimated downlink transmission rates of the first carrier and the second carrier, a sending path for a current data packet to be sent; and a data sending module, configured to send the current data packet to be sent to a target radio link control (RLC) entity, wherein the target RLC entity sends the current data packet to be sent via the sending path.

In a fourth aspect, a data transmission apparatus is provided, including: a rate sensing module, configured to determine, based on a preset parameter of a carrier mounted at a node where a radio link control (RLC) entity is located, a current estimated downlink transmission rate of the carrier, wherein the node includes a master node (MN) or a secondary node (SN); and a rate reporting module, configured to report the current estimated downlink transmission rate of the carrier to a packet data convergence protocol (PDCP) entity, wherein the current estimated downlink transmission rate of the carrier is used by the PDCP entity to determine a sending path for a current data packet to be sent at the PDCP entity.

In a fifth aspect, an electronic device is provided, including: a processor; and a memory, configured to store processor-executable instructions; wherein, the processor is configured to execute the instructions to implement the method as described in the first aspect.

In a sixth aspect, a computer-readable storage medium is provided. Instructions in the storage medium, when executed by a processor of an electronic device, cause the electronic device to perform the method as described in the first aspect.

### BRIEF DESCRIPTION OF DRAWING(S)

To illustrate the technical solutions in embodiments of the specification or in the prior art more clearly, accompanying drawings required for describing the embodiments or the prior art will be briefly introduced below. Apparently, the accompanying drawings in the following description are only some embodiments recorded in the specification, and a person of ordinary skill in the art may still derive other accompanying drawings from these accompanying drawings without creative efforts.
FIG. 1 is a schematic diagram of dual connectivity networking provided by an embodiment of the specification.
FIG. 2 is a schematic diagram of a split bearer terminated by a dual connectivity master node (DC MN) connected to an evolved packet core (EPC) provided by an embodiment of the specification.
FIG. 3 is a schematic diagram of a split bearer terminated by a dual connectivity secondary node (DC SN) connected to an EPC provided by an embodiment of the specification.
FIG. 4 is a schematic diagram of a split bearer terminated by a DC MN connected to a fifth generation core (5GC) provided by an embodiment of the specification.
FIG. 5 is a schematic diagram of a split bearer terminated by a DC SN connected to a 5GC provided by an embodiment of the specification.
FIG. 6 is a schematic flowchart of a data transmission method provided by an embodiment of the specification.
FIG. 7 is a schematic flowchart of a data transmission method provided by another embodiment of the specification.
FIG. 8 is a schematic diagram of a realizing architecture for a data transmission method provided by an embodiment of the specification.
FIG. 9 is a schematic architectural diagram of a split bearer in a data transmission method provided by an embodiment of the specification.
FIG. 10 is a schematic structural diagram of a data transmission apparatus provided by an embodiment of the specification.
FIG. 11 is a schematic structural diagram of a data transmission apparatus provided by another embodiment of the specification.

### DETAILED DESCRIPTION

In order to enable those skilled in the art to better understand the technical solutions in embodiments of the specification, the technical solutions in the embodiments of the specification will be described clearly and completely with reference to accompanying drawings in one or more embodiments of the specification. Apparently, the described embodiments are only part of the embodiments of the specification, rather than all of the embodiments. Based on the embodiments of the specification, all other embodiments obtained by those of ordinary skill in the art without any creative work shall fall within the scope of protection of the present disclosure.

In the specification and the claims, the terms "first," "second" and so on are intended to distinguish similar objects, and are not necessarily used for describing a specific order or sequence. It is to be understood that, such used data is interchangeable where appropriate so that the embodiments of the specification can be implemented in an order other than those illustrated or described here. In addition, in the specification and the claims, "and/or" represents at least one of connected objects, and the character "/" generally indicates an "or" relationship between associated objects.

In order to solve the problem of how to reasonably allocate data arriving at a PDCP entity to various carriers mounted on an RLC entity, an embodiment of the specification provides a data transmission method. The data transmission method may be applied to data distribution for split bearers under dual connectivity (DC) scenarios in a wireless mobile communication network. These dual connectivity scenarios may include, but are not limited to, dual connectivity between 4th generation mobile communication technology (4G) base stations, dual connectivity between a 4G base station and a 5G base station, dual connectivity and multi-connectivity between 5G base stations, etc.

Under dual connectivity, the split bearers can take various forms, including an MN-terminated split bearer and an SN-terminated split bearer. In the MN-terminated split bearer, a packet data convergence protocol (PDCP) entity resides on the MN side, while multiple radio link control (RLC) entities are distributed across different carriers and associated with their respective carriers. In the SN-terminated split bearer, a PDCP layer resides on the SN side, while multiple RLC entities are distributed across different carriers and associated with their respective carriers.

One networking structure of dual connectivity as well as situations of the split bearers under different dual connectivity scenarios are simply illustrated below.

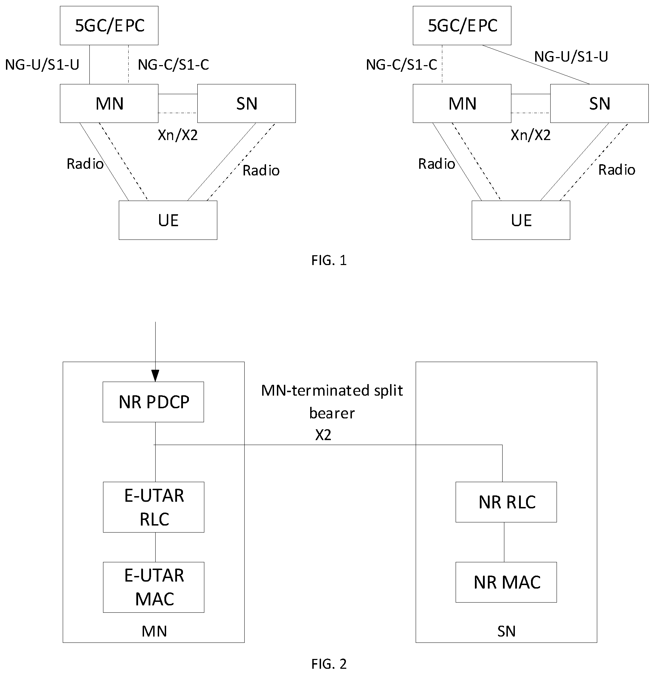

FIG. 1 is a schematic diagram of dual connectivity networking of a fifth generation core (5GC) and an evolved packet core (EPC) provided by an embodiment of the specification. In FIG. 1, the left figure is a schematic diagram of networking in which a control plane of a 5GC/EPC is connected to a master node (MN) via NG-C/S1-C, a user plane of the 5GC/EPC is connected to the MN via NG-U/S1-U, the MN is connected to a secondary node (SN) via an Xn/X2 interface, and UE is connected to the MN and the SN simultaneously via radios. The right figure is a schematic diagram of networking in which the control plane of the 5GC/EPC is connected to the MN via NG-C/S1-C, the user plane of the 5GC/EPC is connected to the SN via NG-U/S1-U, the MN is connected to the SN via an Xn/X2 interface, and the UE is connected to the MN and the SN simultaneously via radios. The 5GC is a 5G core network node, and the EPC is a 4G core network node. The control plane is configured to control information transfer, and the user plane is configured to transmit service data.

FIG. 2 is a schematic diagram of a split bearer terminated by a dual connectivity master node (DC MN) connected to an EPC provided by an embodiment of the specification. In FIG. 2, NR refers to a new radio, PDCP refers to a packet data convergence protocol, RLC refers to radio link control, MAC refers to media access control, and E-UTRA refers to evolved universal terrestrial radio access, the same below. As shown in FIG. 2, a data stream of the bearer converges at an NR PDCP of the MN, where the NR PDCP is connected to RLC of the MN and RLC of an SN respectively.

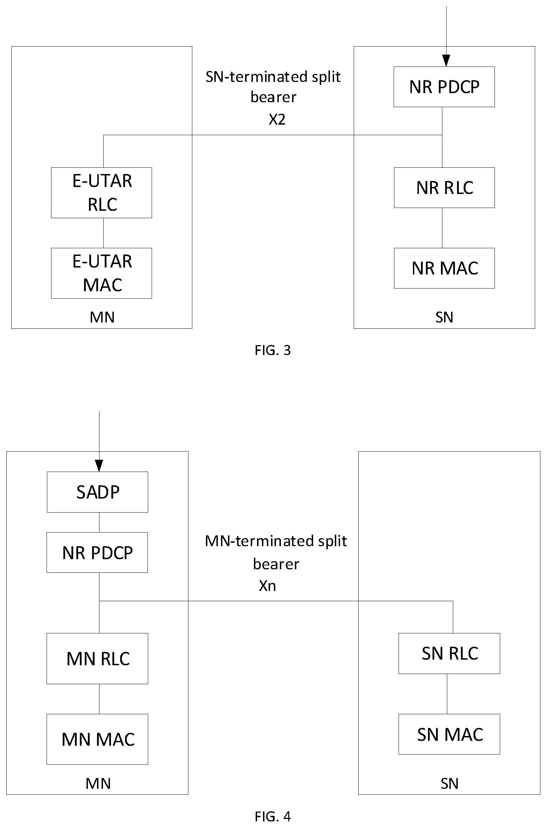

FIG. 3 is a schematic diagram of a split bearer terminated by a dual connectivity secondary node (DC SN) connected to an EPC provided by an embodiment of the specification. As shown in FIG. 3, a data stream of the bearer converges at an NR PDCP of the SN, where the NR PDCP is connected to RLC of an MN and RLC of the SN respectively.

FIG. 4 is a schematic diagram of a split bearer terminated by a DC MN connected to a 5GC provided by an embodiment of the specification. As shown in FIG. 4, a data stream of the bearer converges at an NR PDCP of the MN, where the NR PDCP is connected to RLC of the MN and RLC of an SN respectively. A service data adaptation protocol (SDAP) is a protocol layer newly introduced by a 5G protocol and is used for mapping of a data stream on a radio side to a bearer, the same below.

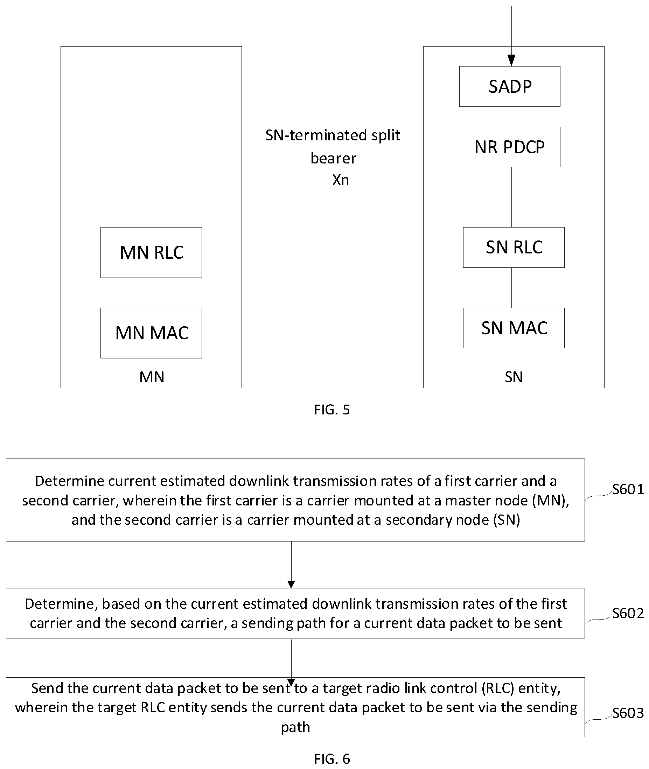

FIG. 5 is a schematic diagram of a split bearer terminated by a DC SN connected to a 5GC provided by an embodiment of the specification. As shown in FIG. 5, a data stream of the bearer converges at an NR PDCP of the SN, where the NR PDCP is connected to RLC of an MN and RLC of the SN respectively.

The data transmission method provided by the embodiment of the specification may be applied to, but is not limited to, the dual connectivity networking scenario shown in FIG. 1, as well as any split bearer scenario shown in FIG. 2, FIG. 3, FIG. 4 or FIG. 5.

The technical solutions provided by various embodiments of the specification are described in detail below in combination with the accompanying drawings.

FIG. 6 is a schematic flowchart of a data transmission method provided by an embodiment of the specification. The method may be applied to a PDCP entity in a split bearer scenario in FIG. 2, FIG. 3, FIG. 4 or FIG. 5. As shown in FIG. 6, the method may include the following steps 601 to 603.

In step 601, current estimated downlink transmission rates of a first carrier and a second carrier are determined, wherein the first carrier is a carrier mounted at a master node (MN), and the second carrier is a carrier mounted at a secondary node (SN).

There may be two implementations as follows for determining the current estimated downlink transmission rates of the first carrier and the second carrier.

Implementation I: determination and reporting by an RLC entity.

Specifically, determining the current estimated downlink transmission rates of the first carrier and the second carrier may include: receiving a current estimated downlink transmission rate estimated and reported by a first RLC entity for the first carrier, wherein the first RLC entity is located at the MN, and the current estimated downlink transmission rate of the first carrier is estimated by the first RLC entity according to a preset parameter of the first carrier; and receiving a current estimated downlink transmission rate estimated and reported by a second RLC entity for the second carrier, wherein the second RLC entity is located at the SN, and the current estimated downlink transmission rate of the second carrier is estimated by the second RLC entity according to a preset parameter of the second carrier.

Implementation II: determination by a PDCP entity.

Specifically, determining the current estimated downlink transmission rates of the first carrier and the second carrier may include: estimating a current estimated downlink transmission rate of the first carrier according to a preset parameter of the first carrier; and estimating a current estimated downlink transmission rate of the second carrier according to a preset parameter of the second carrier.

The preset parameter may include, but is not limited to, at least one of the following: downlink channel quality, a load of a downlink physical resource block (PRB), a radio frame structure, a number of subscribers, or a service priority.

Determining the current estimated downlink transmission rate of the carrier according to the preset parameter of the carrier may include: determining the current estimated downlink transmission rate of the carrier based on a predetermined rate estimation model and the preset parameter of the carrier. The rate estimation model is a function about the preset parameter.

The rate estimation model may be represented as:
v(i)=f(downlink channel quality, a load of a downlink physical resource block (PRB), a radio frame structure, a number of subscribers, a service priority, ...), where i denotes different serial numbers of carriers.

In the rate estimation model, the current estimated downlink transmission rate of the carrier is positively or negatively correlated to the preset parameter of the carrier.

### Specifically:

1) if the preset parameter of the carrier includes the downlink channel quality, then, in the rate estimation model, the current estimated downlink transmission rate of the carrier is positively correlated to the downlink channel quality of the carrier, and the better the downlink channel quality, the higher the current estimated downlink transmission rate.
2) If the preset parameter of the carrier includes the load of the downlink physical resource block (PRB), then, in the rate estimation model, the current estimated downlink transmission rate of the carrier is negatively correlated to the load of the downlink PRB of the carrier, and the smaller the load of the downlink PRB, the higher the current estimated downlink transmission rate.
3) If the preset parameter of the carrier includes the radio frame structure, then, in the rate estimation model, the current estimated downlink transmission rate of the carrier is positively correlated to a proportion of downlink sub-frames in the radio frame structure of the carrier, and the larger the proportion of the downlink sub-frames in the radio frame structure of the carrier, the higher the current estimated downlink transmission rate.
4) If the preset parameter of the carrier includes the number of subscribers, then, in the rate estimation model, the current estimated downlink transmission rate of the carrier is negatively correlated to the number of subscribers of the carrier, and the smaller the number of subscribers of the carrier, the higher the current estimated downlink transmission rate.
5) If the preset parameter of the carrier includes the service priority, then, in the rate estimation model, the current estimated downlink transmission rate of the carrier is positively correlated to the service priority, and the higher the service priority, the higher the current estimated downlink transmission rate.

In step 602, based on the current estimated downlink transmission rates of the first carrier and the second carrier, a sending path for a current data packet to be sent is determined.

The current data packet to be sent mentioned in step 602 refers to a current data packet to be sent which needs a split bearer at the PDCP entity.

The PDCP entity may be located at the MN or the SN. For an MN-terminated split bearer, the PDCP is located at the MN. For an SN-terminated split bearer, the PDCP is located at the SN.

As an example, step 602 may include: comparing the current estimated downlink transmission rates of the first carrier and the second carrier, and determining the carrier with the maximum current estimated downlink transmission rate in the first carrier and the second carrier; determining the carrier with the maximum current estimated downlink transmission rate as a main downlink path for bearing the current data packet to be sent; and determining the main downlink path as the sending path for the current data packet to be sent. That is, the carrier with the maximum current estimated downlink transmission rate in the first carrier and the second carrier is directly used as the sending path for the current data packet to be sent.

As another example, estimated consumed time needed for sending current remaining historical data packets to be sent on the first carrier and on the second carrier may be determined first, and then the sending path for the current data packet to be sent is determined according to the estimated consumed time and the current estimated downlink transmission rates corresponding to the first carrier and the second carrier respectively. That is, step 602 may include: determining the sending path for the current data packet to be sent based on the current estimated downlink transmission rate of the first carrier, the current estimated downlink transmission rate of the second carrier, the estimated consumed time corresponding to the first carrier, and the estimated consumed time corresponding to the second carrier.

By also using the estimated consumed time needed for sending the current remaining historical data packets to be sent on the first carrier and the second carrier (i.e., the current remaining historical data packets to be sent at the RLC entity) as the reference for determining the sending path for the current data packet to be sent at the PDCP entity, the sending path determined for the current data packet to be sent at the PDCP entity may be made more reasonable, without causing congestion of traffics on the first carrier or the second carrier.

Determining the estimated consumed time needed for sending the current remaining historical data packets to be sent on the first carrier and on the second carrier respectively may include: receiving a volume of first data reported by the first RLC entity, wherein the first RLC entity is located at the MN, and the first data includes the current remaining historical data packets to be sent on the first carrier; receiving a volume of second data reported by the second RLC entity, wherein the second RLC entity is located at the SN, and the second data includes the current remaining historical data packets to be sent on the second carrier; determining, based on the volume of the first data and the current estimated downlink transmission rate of the first carrier, the estimated consumed time needed for sending the current remaining historical data packets to be sent on the first carrier; and determining, based on the volume of the second data and the current estimated downlink transmission rate of the second carrier, the estimated consumed time needed for sending the current remaining historical data packets to be sent on the second carrier.

The estimated consumed time needed for sending the current remaining historical data packets to be sent on one carrier generally is: dividing an amount of the current remaining historical data packets to be sent on the carrier by the current estimated downlink transmission rate of the carrier. That is, t(i)=current remaining historical data packets to be sent on a carrier/v(i), where t(i) denotes the estimated consumed time, and v(i) denotes the current estimated downlink transmission rate.

Determining the sending path for the current data packet to be sent based on the current estimated downlink transmission rate of the first carrier, the current estimated downlink transmission rate of the second carrier, the estimated consumed time corresponding to the first carrier, and the estimated consumed time corresponding to the second carrier may include: comparing the current estimated downlink transmission rates of the first carrier and the second carrier, and determining the carrier with the maximum current estimated downlink transmission rate in the first carrier and the second carrier; determining the carrier with the maximum current estimated downlink transmission rate as a main downlink path for bearing the current data packet to be sent; and determining the sending path for the current data packet to be sent based on estimated consumed time corresponding to the main downlink path as well as the estimated consumed time corresponding to the remaining carrier in the first carrier and the second carrier.

In an optional implementation, determining the sending path for the current data packet to be sent based on the estimated consumed time corresponding to the main downlink path as well as the estimated consumed time corresponding to the remaining carrier in the first carrier and the second carrier includes: 1) determining the main downlink path as the sending path for the current data packet to be sent in a case that the estimated consumed time corresponding to the main downlink path meets a first preset condition; 2) determining the carrier with the minimum estimated consumed time in the first carrier and the second carrier as the sending path for the current data packet to be sent in a case that the estimated consumed time corresponding to the main downlink path meets a second preset condition; and 3) not using the carrier as the sending path for the current data packet to be sent in a case that the estimated consumed time corresponding to the first carrier or the second carrier meets a third preset condition.

The first preset condition includes: the estimated consumed time is less than a first threshold; the second preset condition includes: the estimated consumed time is greater than or equal to the first threshold and less than a second threshold; and the third preset condition includes: the estimated consumed time is greater than the second threshold. The first threshold is a preset minimum cache latency of data to be sent in the RLC entity; and the second threshold is a preset maximum cache latency of the data to be sent in the RLC entity.

Specifically, it is assumed that the first threshold is Tmin, and the second threshold is Tmax, where t(i) denotes the estimated consumed time, and v(i) denotes the current estimated downlink transmission rate. Then, the above rule (distribution rule) for determining the sending path for the current data packet to be sent at the PDCP entity may be specifically and correspondingly represented as: 1) when t(i) corresponding to the main downlink path is less than Tmin, the main downlink path is determined as the sending path for the current data packet to be sent; 2) when t(i) corresponding to the main downlink path is greater than or equal to Tmin, the carrier with the minimum t(i) in the first carrier and the second carrier is determined as the sending path for the current data packet to be sent; and 3) when t(i) corresponding to any carrier in the first carrier and the second carrier is greater than Tmax, data is not sent in the carrier.

It is to be noted that, in the embodiment of the specification, the first carrier or the second carrier may be a single carrier or an aggregated carrier. Correspondingly, the sending path for the current data packet to be sent at the PDCP entity may also be a single carrier or an aggregated carrier. Specifically, there are the following situations.
1) If both the first carrier and the second carrier are single carriers, then the current estimated downlink transmission rate of the first carrier is its own current estimated downlink transmission rate, the current estimated downlink transmission rate of the second carrier is its own current estimated downlink transmission rate, and the sending path is a single carrier in the first carrier and the second carrier.
   In a case that the single carrier (the first carrier or the second carrier is the single carrier) is mounted at the RLC entity, distribution is performed on a per-carrier basis, namely distribution on a per-RLC basis.
2) If the first carrier is a first aggregated carrier containing a plurality of first component carriers and the second carrier is a second aggregated carrier containing a plurality of second component carriers, then the current estimated downlink transmission rate of the first carrier is a sum of current estimated downlink transmission rates of the plurality of first component carriers, the current estimated downlink transmission rate of the second carrier is a sum of current estimated downlink transmission rates of the plurality of second component carriers, and the sending path is the first aggregated carrier or the second aggregated carrier.
   In a case that multiple carriers (the first carrier or the second carrier is the aggregated carrier) are mounted at the RLC entity, the current estimated downlink transmission rates of the component carriers are aggregated and reported (summation), and distribution is performed on a per-aggregated carrier basis, namely distribution on a per-RLC basis.
3) If the first carrier includes a plurality of first component carriers and the second carrier includes a plurality of second component carriers, then the current estimated downlink transmission rate of the first carrier includes respective current estimated downlink transmission rates of the plurality of first component carriers, the current estimated downlink transmission rate of the second carrier includes respective current estimated downlink transmission rates of the plurality of second component carriers, and the sending path is a single carrier among the plurality of first component carriers and the plurality of second component carriers.

In a case that multiple carriers (the first carrier or the second carrier includes a plurality of component carriers) are mounted at the RLC entity, the current estimated downlink transmission rates of the component carriers are reported separately (without aggregation), and distribution is performed on a per-carrier basis.

It is to be noted that, at the PDCP entity, distribution of the current data packet to be sent is dynamic, generally, each time a data packet to be sent arrives, t(i) corresponding to the first carrier and the second carrier is calculated, and which carrier the data packet is allocated to is judged in conjunction with the current estimated downlink transmission rates of the first carrier and the second carrier.

In step 603, the current data packet to be sent is sent to a target radio link control (RLC) entity, wherein the target RLC entity sends the current data packet to be sent via the sending path.

The target RLC entity is the first RLC entity or the second RLC entity.

Through step 603, the current data packet to be sent at the PDCP entity may be sent to the target RLC entity corresponding to the sending path, so that the target RLC entity sends the current data packet to be sent via the sending path.

The embodiment of the specification provides the data transmission method. The data transmission method determines the sending path for the current data packet to be sent based on the current estimated downlink transmission rates of the first carrier mounted at the MN and the second carrier mounted at the SN, that is, sensing rates (the current estimated downlink transmission rates) of the first carrier and the second carrier are used as a reference for a downlink split bearer. In this way, the capability of each carrier can be fully utilized, the decrease in user traffic caused by scheduling resource waste or congestion arising from unclear radio capabilities of different carriers is reduced, and data arriving at a PDCP layer is reasonably allocated to each carrier, so that the data transmission efficiency is improved.

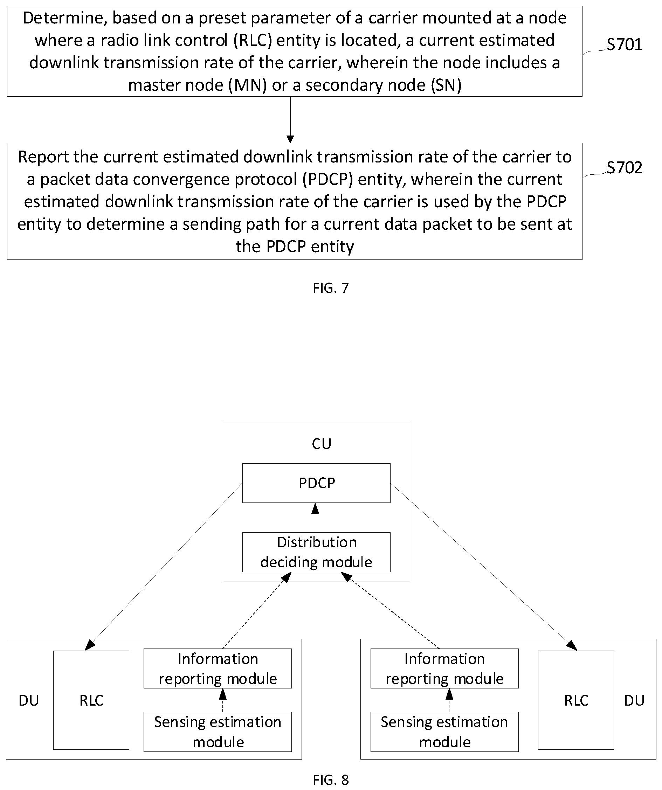

FIG. 7 is a schematic flowchart of a data transmission method provided by another embodiment of the specification. The method may be applied to an RLC entity in a split bearer scenario in FIG. 2, FIG. 3, FIG. 4 or FIG. 5. The RLC entity may be located at an MN or an SN. As shown in FIG. 7, the method may include step 701 and step 702.

In step 701, based on a preset parameter of a carrier mounted at a node where a radio link control (RLC) entity is located, a current estimated downlink transmission rate of the carrier is determined, wherein the node includes a master node (MN) or a secondary node (SN).

As an example, step 701 may include: determining the current estimated downlink transmission rate of the carrier based on a predetermined rate estimation model and the preset parameter of the carrier mounted at the node where the RLC entity is located. The rate estimation model is a function about the preset parameter.

The preset parameter includes at least one of downlink channel quality, a load of a downlink physical resource block (PRB), a radio frame structure, a number of subscribers, or a service priority.

The rate estimation model may be represented as:
v(i)=f(downlink channel quality, a load of a downlink physical resource block (PRB), a radio frame structure, a number of subscribers, a service priority, ...), where i denotes different serial numbers of carriers.

In the rate estimation model, the current estimated downlink transmission rate of the carrier is positively or negatively correlated to the preset parameter of the carrier.

### Specifically:

1) if the preset parameter of the carrier includes the downlink channel quality, then, in the rate estimation model, the current estimated downlink transmission rate of the carrier is positively correlated to the downlink channel quality of the carrier, and the better the downlink channel quality, the higher the current estimated downlink transmission rate.
2) If the preset parameter of the carrier includes the load of the downlink physical resource block (PRB), then, in the rate estimation model, the current estimated downlink transmission rate of the carrier is negatively correlated to the load of the downlink PRB of the carrier, and the smaller the load of the downlink PRB, the higher the current estimated downlink transmission rate.
3) If the preset parameter of the carrier includes the radio frame structure, then, in the rate estimation model, the current estimated downlink transmission rate of the carrier is positively correlated to a proportion of downlink sub-frames in the radio frame structure of the carrier, and the larger the proportion of the downlink sub-frames in the radio frame structure of the carrier, the higher the current estimated downlink transmission rate.
4) If the preset parameter of the carrier includes the number of subscribers, then, in the rate estimation model, the current estimated downlink transmission rate of the carrier is negatively correlated to the number of subscribers of the carrier, and the smaller the number of subscribers of the carrier, the higher the current estimated downlink transmission rate.
5) If the preset parameter of the carrier includes the service priority, then, in the rate estimation model, the current estimated downlink transmission rate of the carrier is positively correlated to the service priority, and the higher the service priority, the higher the current estimated downlink transmission rate.

In step 702, the current estimated downlink transmission rate of the carrier is reported to a packet data convergence protocol (PDCP) entity, wherein the current estimated downlink transmission rate of the carrier is used by the PDCP entity to determine a sending path for a current data packet to be sent at the PDCP entity.

It is to be noted that, in the embodiment of the specification, the carrier mounted at the RLC entity may be a single carrier or an aggregated carrier. Correspondingly, step 702 may include: reporting, if the carrier is the single carrier, the current estimated downlink transmission rate of the carrier to the PDCP entity separately; and reporting, if the carrier is a component carrier in the aggregated carrier, to the PDCP entity a sum of the current estimated downlink transmission rate of the carrier and current estimated downlink transmission rates of other component carriers.

More specifically, there may be three situations below: 1) if the carrier mounted at the node where the RLC entity is located is the single carrier, then reporting the current estimated downlink transmission rate of the carrier to the PDCP entity includes: reporting the current estimated downlink transmission rate of the single carrier to the PDCP entity; 2) if the carrier mounted at the node where the RLC entity is located is the aggregated carrier containing a plurality of component carriers, then reporting the current estimated downlink transmission rate of the carrier to the PDCP entity includes: reporting a sum of current estimated downlink transmission rates of the plurality of component carriers to the PDCP entity; and 3) if the carrier mounted at the node where the RLC entity is located includes a plurality of component carriers, then reporting the current estimated downlink transmission rate of the carrier to the PDCP entity includes: reporting current estimated downlink transmission rates of the plurality of component carriers to the PDCP entity separately.

According to the data transmission method provided by the embodiment of the specification, the RLC entity determines the current estimated downlink transmission rate of the carrier mounted thereon and reports it to the PDCP entity, such that the PDCP entity determines the sending path for the current data packet to be sent according to the current estimated downlink transmission rate of each carrier. That is, sensing rates (the current estimated downlink transmission rates) of the carriers are used as a reference for a downlink split bearer. In this way, the capability of each carrier can be fully utilized, the decrease in user traffic caused by scheduling resource waste or congestion arising from unclear radio capabilities of different carriers is reduced, and data arriving at a PDCP layer is reasonably allocated to each carrier, so that the data transmission efficiency is improved.

In an optional implementation, the method shown in FIG. 7 may further include: reporting a data volume of current remaining historical data packets to be sent on the carrier to the PDCP entity, wherein the data volume is used to determine estimated consumed time needed for sending the current remaining historical data packets to be sent on the carrier, and the estimated consumed time is used by the PDCP entity to determine the sending path for the current data packet to be sent at the PDCP entity.

It may be appreciated that, by also using the estimated consumed time needed for sending the current remaining historical data packets to be sent on the corresponding carriers (i.e., the current remaining historical data packets to be sent at the RLC entity) as the reference for determining the sending path for the current data packet to be sent at the PDCP entity, the sending path determined for the current data packet to be sent at the PDCP entity may be made more reasonable, without causing congestion of traffics on the corresponding carriers.

FIG. 8 is a schematic diagram of a realizing architecture for a data transmission method provided by an embodiment of the specification. In FIG. 8, CU refers to a centralized unit, and DU refers to a distributed unit. A 5G base station divides a baseband unit (BBU) into a CU and DUs, and connects the BBU to an active antenna unit (AAU) through an optical fiber. The CU is responsible for hosting a radio resource control (RRC) layer, a service data adaptation protocol (SDAP) sub-layer and a PDCP sub-layer of the 5G base station, and centrally controls one or more DUs.

In FIG. 8, a distribution deciding module is arranged in a PDCP entity, and a sensing estimation module and an information reporting module are arranged in an RLC entity.

The sensing estimation module is configured to acquire a preset parameter of a carrier mounted at the RLC entity, and determine a current estimated downlink transmission rate of the carrier according to the preset parameter of the carrier.

The information reporting module is configured to report the current estimated downlink transmission rate of the carrier to the distribution deciding module in the PDCP entity, and optionally, an amount of remaining historical data packets to be sent on the carrier may also be reported to the distribution deciding module in the PDCP entity.

The distribution deciding module is configured to receive the current estimated downlink transmission rate of each carrier reported by the RLC entity, and determine a sending path for a current data packet to be sent at the PDCP entity based on the current estimated downlink transmission rate of each carrier.

Please refer to the data transmission method described above for the detailed functions that can be realized by the sensing estimation module, the information reporting module and the distribution deciding module, which is omitted here.

It is to be noted that, FIG. 8 is merely a possible architecture for implementing the data transmission method provided by the specification, and it does not mean that the data transmission method provided by the specification can only be implemented by the architecture shown in FIG. 8.

The specific embodiments of the specification are described above. Other embodiments are within the range of the appended claims. In some cases, the actions or steps recorded in the claims may be executed in a sequence different from that of the embodiment and may still achieve expected results. In addition, the process depicted in the accompanying drawings does not necessarily require a particular order or sequential order shown to achieve the expected results. In some implementation, multitasking and parallel processing may be possible or may be advantageous.

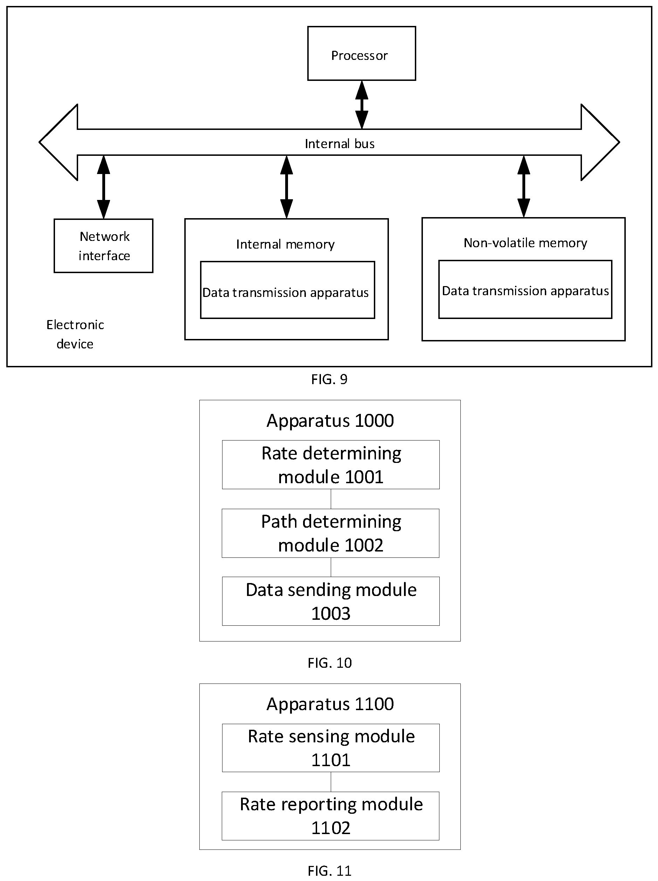

FIG. 9 is a schematic structural diagram of an electronic device in an embodiment of the specification. Referring to FIG. 9, at the hardware level, the electronic device includes a processor, optionally an internal bus, a network interface, and a memory. The memory may include an internal memory such as a high-speed random-access memory (RAM), or a non-volatile memory such as at least one disk memory. Of course, the electronic device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bi-directional arrow is shown in FIG. 9, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form a data transmission apparatus at a logical level. The processor executes the program stored in the memory, and is specifically configured to execute the following operations:

determining current estimated downlink transmission rates of a first carrier and a second carrier, wherein the first carrier is a carrier mounted at a master node (MN), and the second carrier is a carrier mounted at a secondary node (SN); determining, based on the current estimated downlink transmission rates of the first carrier and the second carrier, a sending path for a current data packet to be sent; and sending the current data packet to be sent to a target radio link control (RLC) entity, wherein the target RLC entity sends the current data packet to be sent via the sending path.

Alternatively, the processor executes the program stored in the memory, and is specifically configured to execute the following operations: determining, based on a preset parameter of a carrier mounted at a node where a radio link control (RLC) entity is located, a current estimated downlink transmission rate of the carrier, wherein the node includes a master node (MN) or a secondary node (SN); and reporting the current estimated downlink transmission rate of the carrier to a packet data convergence protocol (PDCP) entity, wherein the current estimated downlink transmission rate of the carrier is used by the PDCP entity to determine a sending path for a current data packet to be sent at the PDCP entity.

The above method performed by the data transmission apparatus disclosed in the embodiment shown in FIG. 9 of the specification may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The processor may implement or perform the various methods, steps, and logic block diagrams disclosed in the embodiments of the specification. The general-purpose processor may be a microprocessor, or the processor may also be any conventional processor, etc. The steps of the method disclosed in conjunction with the embodiments of the specification may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device may further perform the method shown in FIG. 6 or FIG. 7, and realize the functions of the data transmission apparatus in the embodiment shown in FIG. 6 or FIG. 7, which is omitted here in the embodiments of the specification.

Of course, in addition to the software implementations, the electronic device of the specification does not exclude other implementations, such as logic devices or combinations of software and hardware, that is, an execution body of the following process flows is not limited to each logic unit, but may be hardware or logic devices.

An embodiment of the specification further provides a computer-readable storage medium. The computer-readable storage medium stores one or more programs which include instructions. The instructions, when executed by a portable electronic device including a plurality of application programs, can enable the portable electronic device to perform the method in the embodiment shown in FIG. 6 or FIG. 7, and the portable electronic device is specifically configured to execute the following operations: determining current estimated downlink transmission rates of a first carrier and a second carrier, wherein the first carrier is a carrier mounted at a master node (MN), and the second carrier is a carrier mounted at a secondary node (SN); determining, based on the current estimated downlink transmission rates of the first carrier and the second carrier, a sending path for a current data packet to be sent; and sending the current data packet to be sent to a target radio link control (RLC) entity, wherein the target RLC entity sends the current data packet to be sent via the sending path.

Alternatively, the portable electronic device is specifically configured to execute the following operations: determining, based on a preset parameter of a carrier mounted at a node where a radio link control (RLC) entity is located, a current estimated downlink transmission rate of the carrier, wherein the node includes a master node (MN) or a secondary node (SN); and reporting the current estimated downlink transmission rate of the carrier to a packet data convergence protocol (PDCP) entity, wherein the current estimated downlink transmission rate of the carrier is used by the PDCP entity to determine a sending path for a current data packet to be sent at the PDCP entity.

FIG. 10 is a schematic structural diagram of a data transmission apparatus 1000 provided by an embodiment of the specification. The apparatus 1000 may be applied to a PDCP entity in a split bearer scenario in FIG. 2, FIG. 3, FIG. 4 or FIG. 5. Referring to FIG. 10, in a software implementation, the data transmission apparatus 1000 may include: a rate determining module 1001, a path determining module 1002 and a data sending module 1003.

The rate determining module 1001 is configured to determine current estimated downlink transmission rates of a first carrier and a second carrier, wherein the first carrier is a carrier mounted at a master node (MN), and the second carrier is a carrier mounted at a secondary node (SN).

There may be two implementations as follows for determining the current estimated downlink transmission rates of the first carrier and the second carrier.

Implementation I: determination and reporting by an RLC entity.

Specifically, the rate determining module 1001 may be configured to: receive a current estimated downlink transmission rate estimated and reported by a first RLC entity for the first carrier, wherein the first RLC entity is located at the MN, and the current estimated downlink transmission rate of the first carrier is estimated by the first RLC entity according to a preset parameter of the first carrier; and receive a current estimated downlink transmission rate estimated and reported by a second RLC entity for the second carrier, wherein the second RLC entity is located at the SN, and the current estimated downlink transmission rate of the second carrier is estimated by the second RLC entity according to a preset parameter of the second carrier.

Implementation II: determination by the PDCP entity.

Specifically, the rate determining module 1001 may be configured to: estimate a current estimated downlink transmission rate of the first carrier according to a preset parameter of the first carrier; and estimate a current estimated downlink transmission rate of the second carrier according to a preset parameter of the second carrier.

The preset parameter may include, but is not limited to, at least one of the following: downlink channel quality, a load of a downlink physical resource block (PRB), a radio frame structure, a number of subscribers, or a service priority.

Determining the current estimated downlink transmission rate of the carrier according to the preset parameter of the carrier may include: determining the current estimated downlink transmission rate of the carrier based on a predetermined rate estimation model and the preset parameter of the carrier. The rate estimation model is a function about the preset parameter.

The rate estimation model may be represented as:
v(i)=f(downlink channel quality, a load of a downlink physical resource block (PRB), a radio frame structure, a number of subscribers, a service priority, ...), where i denotes different serial numbers of carriers.

In the rate estimation model, the current estimated downlink transmission rate of the carrier is positively or negatively correlated to the preset parameter of the carrier.

Specifically:
1) if the preset parameter of the carrier includes the downlink channel quality, then, in the rate estimation model, the current estimated downlink transmission rate of the carrier is positively correlated to the downlink channel quality of the carrier, and the better the downlink channel quality, the higher the current estimated downlink transmission rate.
2) If the preset parameter of the carrier includes the load of the downlink physical resource block (PRB), then, in the rate estimation model, the current estimated downlink transmission rate of the carrier is negatively correlated to the load of the downlink PRB of the carrier, and the smaller the load of the downlink PRB, the higher the current estimated downlink transmission rate.
3) If the preset parameter of the carrier includes the radio frame structure, then, in the rate estimation model, the current estimated downlink transmission rate of the carrier is positively correlated to a proportion of downlink sub-frames in the radio frame structure of the carrier, and the larger the proportion of the downlink sub-frames in the radio frame structure of the carrier, the higher the current estimated downlink transmission rate.
4) If the preset parameter of the carrier includes the number of subscribers, then, in the rate estimation model, the current estimated downlink transmission rate of the carrier is negatively correlated to the number of subscribers of the carrier, and the smaller the number of subscribers of the carrier, the higher the current estimated downlink transmission rate.
5) If the preset parameter of the carrier includes the service priority, then, in the rate estimation model, the current estimated downlink transmission rate of the carrier is positively correlated to the service priority, and the higher the service priority, the higher the current estimated downlink transmission rate.

The path determining module 1002 is configured to determine, based on the current estimated downlink transmission rates of the first carrier and the second carrier, a sending path for a current data packet to be sent.

As an example, the path determining module 1002 may be configured to: compare the current estimated downlink transmission rates of the first carrier and the second carrier, and determine the carrier with the maximum current estimated downlink transmission rate in the first carrier and the second carrier; determine the carrier with the maximum current estimated downlink transmission rate as a main downlink path for bearing the current data packet to be sent; and determine the main downlink path as the sending path for the current data packet to be sent. That is, the carrier with the maximum current estimated downlink transmission rate in the first carrier and the second carrier is directly used as the sending path for the current data packet to be sent.

As another example, estimated consumed time needed for sending current remaining historical data packets to be sent on the first carrier and on the second carrier may be determined first, and then the sending path for the current data packet to be sent is determined according to the estimated consumed time and the current estimated downlink transmission rates corresponding to the first carrier and the second carrier respectively. That is, the path determining module 1002 may be configured to: determine the sending path for the current data packet to be sent based on the current estimated downlink transmission rate of the first carrier, the current estimated downlink transmission rate of the second carrier, the estimated consumed time corresponding to the first carrier, and the estimated consumed time corresponding to the second carrier.

It may be appreciated that, by also using the estimated consumed time needed for sending the current remaining historical data packets to be sent on the first carrier and the second carrier (i.e., the current remaining historical data packets to be sent at the RLC entity) as the reference for determining the sending path for the current data packet to be sent at the PDCP entity, the sending path determined for the current data packet to be sent at the PDCP entity may be made more reasonable, without causing congestion of traffics on the first carrier or the second carrier.

Determining the estimated consumed time needed for sending the current remaining historical data packets to be sent on the first carrier and on the second carrier respectively may include: receiving a volume of first data reported by the first RLC entity, wherein the first RLC entity is located at the MN, and the first data includes the current remaining historical data packets to be sent on the first carrier; receiving a volume of second data reported by the second RLC entity, wherein the second RLC entity is located at the SN, and the second data includes the current remaining historical data packets to be sent on the second carrier; determining, based on the volume of the first data and the current estimated downlink transmission rate of the first carrier, the estimated consumed time needed for sending the current remaining historical data packets to be sent on the first carrier; and determining, based on the volume of the second data and the current estimated downlink transmission rate of the second carrier, the estimated consumed time needed for sending the current remaining historical data packets to be sent on the second carrier.

It may be appreciated that, the estimated consumed time needed for sending the current remaining historical data packets to be sent on one carrier generally is: dividing an amount of the current remaining historical data packets to be sent on the carrier by the current estimated downlink transmission rate of the carrier. That is, t(i)=current remaining historical data packets to be sent on a carrier/v(i), where t(i) denotes the estimated consumed time, and v(i) denotes the current estimated downlink transmission rate.

Determining the sending path for the current data packet to be sent based on the current estimated downlink transmission rate of the first carrier, the current estimated downlink transmission rate of the second carrier, the estimated consumed time corresponding to the first carrier, and the estimated consumed time corresponding to the second carrier may include: comparing the current estimated downlink transmission rates of the first carrier and the second carrier, and determining the carrier with the maximum current estimated downlink transmission rate in the first carrier and the second carrier; determining the carrier with the maximum current estimated downlink transmission rate as a main downlink path for bearing the current data packet to be sent; and determining the sending path for the current data packet to be sent based on estimated consumed time corresponding to the main downlink path as well as the estimated consumed time corresponding to the remaining carrier in the first carrier and the second carrier.

In an optional implementation, determining the sending path for the current data packet to be sent based on the estimated consumed time corresponding to the main downlink path as well as the estimated consumed time corresponding to the remaining carrier in the first carrier and the second carrier includes: 1) determining the main downlink path as the sending path for the current data packet to be sent in a case that the estimated consumed time corresponding to the main downlink path meets a first preset condition; 2) determining the carrier with the minimum estimated consumed time in the first carrier and the second carrier as the sending path for the current data packet to be sent in a case that the estimated consumed time corresponding to the main downlink path meets a second preset condition; and 3) not using the carrier as the sending path for the current data packet to be sent in a case that the estimated consumed time corresponding to the first carrier or the second carrier meets a third preset condition.

The first preset condition includes: the estimated consumed time is less than a first threshold; the second preset condition includes: the estimated consumed time is greater than or equal to the first threshold and less than a second threshold; and the third preset condition includes: the estimated consumed time is greater than the second threshold. The first threshold is a preset minimum cache latency of data to be sent in the RLC entity; and the second threshold is a preset maximum cache latency of the data to be sent in the RLC entity.

The data sending module 1003 is configured to send the current data packet to be sent to a target radio link control (RLC) entity, wherein the target RLC entity sends the current data packet to be sent via the sending path.

The target RLC entity is the first RLC entity or the second RLC entity.

Through the data sending module 1003, the current data packet to be sent at the PDCP entity may be sent to the target RLC entity corresponding to the sending path, so that the target RLC entity sends the current data packet to be sent via the sending path.

According to the data transmission apparatus 1000 provided by the embodiment of the specification, as for the first carrier mounted at the MN and the second carrier mounted at the SN, the sending path for the current data packet to be sent is determined based on the current estimated downlink transmission rates of the two carriers. That is, sensing rates (the current estimated downlink transmission rates) of the first carrier and the second carrier are used as a reference for a downlink split bearer. In this way, the capability of each carrier can be fully utilized, the decrease in user traffic caused by scheduling resource waste or congestion arising from unclear radio capabilities of different carriers is reduced, and data arriving at a PDCP layer is reasonably allocated to each carrier, so that the data transmission efficiency is improved.

The data transmission apparatus 1000 provided by the embodiment of the specification may further perform the method in FIG. 6, and realize the functions of the data transmission apparatus 1000 in the embodiment shown in FIG. 6, which is omitted here in the embodiment of the specification.

FIG. 11 is a schematic structural diagram of a data transmission apparatus 1100 provided by an embodiment of the specification. Referring to FIG. 11, in a software implementation, the data transmission apparatus 1100 may include: a rate sensing module 1101 and a rate reporting module 1102.

The rate sensing module 1101 is configured to determine, based on a preset parameter of a carrier mounted at a node where a radio link control (RLC) entity is located, a current estimated downlink transmission rate of the carrier, wherein the node includes a master node (MN) or a secondary node (SN).

The rate reporting module 1102 is configured to report the current estimated downlink transmission rate of the carrier to a packet data convergence protocol (PDCP) entity, wherein the current estimated downlink transmission rate of the carrier is used by the PDCP entity to determine a sending path for a current data packet to be sent at the PDCP entity.

In an optional implementation, the apparatus 1100 may further include: a data volume reporting module, configured to report a data volume of current remaining historical data packets to be sent on the carrier to the PDCP entity, wherein the data volume is used to determine estimated consumed time needed for sending the current remaining historical data packets to be sent on the carrier, and the estimated consumed time is used by the PDCP entity to determine the sending path for the current data packet to be sent at the PDCP entity.

The data transmission apparatus 1100 provided by the embodiment of the specification may further perform the method in FIG. 7, and obtain the same technical effects, which is omitted here in the embodiment of the specification.

In total, the above is merely part of embodiments of the specification and is not intended to limit the scope of protection of the specification. Any modification, equivalent replacement, improvement, etc. made within the spirit and principle of the specification should be included in the scope of protection of the specification.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

A computer-readable medium includes permanent and non-permanent, and removable and non-removable media, and may achieve information storage through any method or technology. The information may be computer-readable instructions, data structures, modules of programs, or other data. Examples of a computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital video disk (DVD) or other optical storage and magnetic cassette tape, magnetic-tape magnetic-disk storage or other magnetic storage devices or any other non-transmission media, and may be used to store information that can be accessed by a computing device. It should further be noted that, the terms "include," "comprise" or any other variants thereof are intended to cover non-exclusive inclusion, so that a process, method, article or device including a series of elements not only includes those elements, but also includes other elements not clearly listed, or also includes elements inherent to this process, method, article or device. Without further restrictions, the elements defined by the sentence "including a..." do not exclude that there are other same elements in the process, method, article or device including the elements.

The various embodiments in the specification are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A data transmission method, comprising:
determining current estimated downlink transmission rates of a first carrier and a second carrier, wherein the first carrier is a carrier mounted at a master node MN, and the second carrier is a carrier mounted at a secondary node SN;
determining, based on the current estimated downlink transmission rates of the first carrier and the second carrier, a sending path for a current data packet to be sent; and
sending the current data packet to be sent to a target radio link control RLC entity, wherein the target RLC entity sends the current data packet to be sent via the sending path.

2. The method according to claim 1, wherein determining current estimated downlink transmission rates of a first carrier and a second carrier comprises:
receiving a current estimated downlink transmission rate estimated and reported by a first RLC entity for the first carrier, wherein the first RLC entity is located at the MN, and the current estimated downlink transmission rate of the first carrier is estimated by the first RLC entity according to a preset parameter of the first carrier; and
receiving a current estimated downlink transmission rate estimated and reported by a second RLC entity for the second carrier, wherein the second RLC entity is located at the SN, and the current estimated downlink transmission rate of the second carrier is estimated by the second RLC entity according to a preset parameter of the second carrier;
wherein the target RLC entity is the first RLC entity or the second RLC entity.

3. The method according to claim 1, wherein determining current estimated downlink transmission rates of a first carrier and a second carrier comprises:
estimating the current estimated downlink transmission rate of the first carrier according to a preset parameter of the first carrier; and
estimating the current estimated downlink transmission rate of the second carrier according to a preset parameter of the second carrier.

4. The method according to claim 2 or 3, wherein
the preset parameter comprises at least one of downlink channel quality, a load of a downlink physical resource block PRB, a radio frame structure, a number of subscribers, or a service priority.

5. The method according to claim 1, before determining, based on the current estimated downlink transmission rates of the first carrier and the second carrier, a sending path for a current data packet to be sent, the method further comprising:
determining estimated consumed time needed for sending current remaining historical data packets to be sent on the first carrier and the second carrier respectively.

6. The method according to claim 5, wherein determining estimated consumed time needed for sending current remaining historical data packets to be sent on the first carrier and the second carrier respectively comprises:
receiving a volume of first data reported by a first RLC entity, wherein the first RLC entity is located at the MN, and the first data comprises the current remaining historical data packets to be sent on the first carrier;
receiving a volume of second data reported by a second RLC entity, wherein the second RLC entity is located at the SN, and the second data comprises the current remaining historical data packets to be sent on the second carrier;
determining, based on the volume of the first data and the current estimated downlink transmission rate of the first carrier, the estimated consumed time needed for sending the current remaining historical data packets to be sent on the first carrier; and
determining, based on the volume of the second data and the current estimated downlink transmission rate of the second carrier, the estimated consumed time needed for sending the current remaining historical data packets to be sent on the second carrier.

7. The method according to claim 5, wherein determining, based on the current estimated downlink transmission rates of the first carrier and the second carrier, a sending path for a current data packet to be sent comprises:
determining the sending path for the current data packet to be sent based on the current estimated downlink transmission rate of the first carrier, the current estimated downlink transmission rate of the second carrier, the estimated consumed time corresponding to the first carrier, and the estimated consumed time corresponding to the second carrier.

8. The method according to claim 7, wherein determining the sending path for the current data packet to be sent based on the current estimated downlink transmission rate of the first carrier, the current estimated downlink transmission rate of the second carrier, the estimated consumed time corresponding to the first carrier, and the estimated consumed time corresponding to the second carrier comprises:
comparing the current estimated downlink transmission rates of the first carrier and the second carrier, and determining the carrier with the maximum current estimated downlink transmission rate in the first carrier and the second carrier;
determining the carrier with the maximum current estimated downlink transmission rate as a main downlink path for bearing the current data packet to be sent; and
determining the sending path for the current data packet to be sent based on estimated consumed time corresponding to the main downlink path as well as the estimated consumed time corresponding to the remaining carrier in the first carrier and the second carrier.

9. The method according to claim 8, wherein determining the sending path for the current data packet to be sent based on the estimated consumed time corresponding to the main downlink path as well as the estimated consumed time corresponding to the remaining carrier in the first carrier and the second carrier comprises:
determining the main downlink path as the sending path for the current data packet to be sent in a case that the estimated consumed time corresponding to the main downlink path meets a first preset condition;
determining the carrier with the minimum estimated consumed time in the first carrier and the second carrier as the sending path for the current data packet to be sent in a case that the estimated consumed time corresponding to the main downlink path meets a second preset condition; and
not using the carrier as the sending path for the current data packet to be sent in a case that the estimated consumed time corresponding to the first carrier or the second carrier meets a third preset condition.

10. The method according to claim 9, wherein
the first preset condition comprises: the estimated consumed time is less than a first threshold;
the second preset condition comprises: the estimated consumed time is greater than or equal to the first threshold and less than a second threshold; and
the third preset condition comprises: the estimated consumed time is greater than the second threshold.

11. The method according to claim 10, wherein
the first threshold is a preset minimum cache latency of data to be sent in an RLC entity; and
the second threshold is a preset maximum cache latency of the data to be sent in the RLC entity.

12. The method according to any one of claims 1 to 11, wherein
the sending path is a single carrier or an aggregated carrier.

13. A data transmission method, comprising:
determining, based on a preset parameter of a carrier mounted at a node where a radio link control RLC entity is located, a current estimated downlink transmission rate of the carrier, wherein the node comprises a master node MN or a secondary node SN; and
reporting the current estimated downlink transmission rate of the carrier to a packet data convergence protocol PDCP entity, wherein the current estimated downlink transmission rate of the carrier is used by the PDCP entity to determine a sending path for a current data packet to be sent at the PDCP entity.

14. The method according to claim 13, wherein determining, based on a preset parameter of a carrier mounted at a node where a RLC entity is located, a current estimated downlink transmission rate of the carrier comprises:
determining the current estimated downlink transmission rate of the carrier based on a predetermined rate estimation model and the preset parameter of the carrier mounted at the node where the RLC entity is located, wherein the rate estimation model is a function about the preset parameter.

15. The method according to claim 14, wherein the preset parameter comprises at least one of downlink channel quality, a load of a downlink physical resource block PRB, a radio frame structure, a number of subscribers, or a service priority.

16. The method according to claim 15, wherein
in the rate estimation model, the current estimated downlink transmission rate of the carrier is positively or negatively correlated to the preset parameter of the carrier.

17. The method according to claim 16, wherein
if the preset parameter of the carrier comprises the downlink channel quality, then, in the rate estimation model, the current estimated downlink transmission rate of the carrier is positively correlated to the downlink channel quality of the carrier;
if the preset parameter of the carrier comprises the load of the downlink physical resource block PRB, then, in the rate estimation model, the current estimated downlink transmission rate of the carrier is negatively correlated to the load of the downlink PRB of the carrier;
if the preset parameter of the carrier comprises the radio frame structure, then, in the rate estimation model, the current estimated downlink transmission rate of the carrier is positively correlated to a proportion of downlink sub-frames in the radio frame structure of the carrier;
if the preset parameter of the carrier comprises the number of subscribers, then, in the rate estimation model, the current estimated downlink transmission rate of the carrier is negatively correlated to the number of subscribers of the carrier; and
if the preset parameter of the carrier comprises the service priority, then, in the rate estimation model, the current estimated downlink transmission rate of the carrier is positively correlated to the service priority.

18. The method according to any one of claims 13 to 17, wherein reporting the current estimated downlink transmission rate of the carrier to a PDCP entity comprises:
reporting, if the carrier is a single carrier, the current estimated downlink transmission rate of the carrier to the PDCP entity separately; and
reporting, if the carrier is a component carrier in an aggregated carrier, to the PDCP entity a sum of the current estimated downlink transmission rate of the carrier and current estimated downlink transmission rates of other component carriers.

19. The method according to any one of claims 13 to 17, further comprising:
reporting a data volume of current remaining historical data packets to be sent on the carrier to the PDCP entity, wherein the data volume is used to determine estimated consumed time needed for sending the current remaining historical data packets to be sent on the carrier, and the estimated consumed time is used by the PDCP entity to determine the sending path for the current data packet to be sent at the PDCP entity.

20. An electronic device, comprising:
a processor; and
a memory, configured to store processor-executable instructions;
wherein the processor is configured to execute the instructions to implement the method according to any one of claims 1 to 19.

21. A computer-readable storage medium, wherein instructions in the storage medium, when executed by a processor of an electronic device, cause the electronic device to perform the method according to any one of claims 1 to 19.
